# EUROPEAN PATENT APPLICATION

(11) **EP 4 645 341 A1**
(43) Date of publication of application: **05.11.2025**
(21) Application number: 25172975.2
(22) Date of filing: 28.04.2025
(51) Int. Cl.: G21C 9/004, G21C 13/00

(54) **PRESSURIZER VALVE DEVICE AND REACTOR FACILITY INCLUDING THE SAME**

(30) Priority: 29.04.2024 KR 20240057133
(71) Applicant: Korea Atomic Energy Research Institute, Daejeon 34057 (KR)
(72) Inventor: LEE, Jong Hui, 34057 Daejeon (KR); RYU, Seungyeob, 34057 Daejeon (KR); KIM, Seok, 34057 Daejeon (KR); CHANG, Cheong Bong, 34057 Daejeon (KR); CHO, Hyunjun, 34057 Daejeon (KR)
(74) Representative: BCKIP Part mbB

(57) **Abstract**

A pressurizer valve device comprising: a valve housing disposed in a reactor vessel accommodated in a containment vessel, and having a communication hole through which steam in the reactor vessel is introduced, a discharge hole, through which the steam introduced into an interior of the reactor vessel is discharged to the containment vessel, and a connection hole, through which a fluid is introduced; and a valve piston disposed to be movable in one direction in the interior of the valve housing, and configured to open and close the communication hole depending on a change in a vessel pressure in the reactor vessel.

## Description

### BACKGROUND OF THE INVENTION

### Field of the Invention

The present disclosure relates to a pressurizer valve device and a reactor facility including the same.

### Description of the Related Art

The reactor may release steam to prevent the internal pressure from exceeding a preset design pressure. The reactor includes a reactor vessel that accommodates the reactor core, a containment vessel surrounding the reactor vessel, a pressurizer valve to lower the internal pressure of the reactor vessel, a reactor discharge valve to discharge coolant into the containment vessel, and a reactor recirculation valve to recirculate condensate into the reactor vessel. In addition, the pressurizer valve is opened when the internal pressure of the reactor vessel exceeds a preset design pressure, reducing the internal pressure of the reactor vessel and discharging the steam of the reactor vessel into the containment vessel.

In the conventional commercial large-scale reactor, even if steam is discharged from the reactor vessel to the outside (containment vessel or containment building), the external pressure hardly increases because the outside has a large enough accommodation space. However, if steam is continuously discharged from the pressurizer valve of a small modular reactor, the narrow containment vessel space can increase the pressure of the containment vessel. There is a problem that the internal pressure of the reactor vessel may exceed a preset design pressure due to the delay in opening the pressurizer valve. In other words, in order for the conventional reactor's pressurizer valve to reopen, a higher pressure must be applied to the pressurizer valve than the internal pressure of the reactor vessel when previously opened. In addition, as the opening of the pressurizer valve is delayed, the internal pressure of the reactor vessel exceeds the design pressure, and the reactor vessel may be damaged.

### [Previous art literature]

### [patent literature]

(Patent Document 1) Korean Patent Publication 10-2021-0079954 (released on June 30, 2021)

### SUMMARY OF THE INVENTION

The problem to be solved by the present disclosure is to provide a pressurizer valve device capable of preventing the reactor vessel from being damaged due to a delay in opening the pressurizer valve device and a reactor facility including the same.

The pressurizer valve device of the reactor facility according to an embodiment of the present disclosure may discharge steam whenever the internal pressure of the reactor vessel reaches a preset opening pressure, thereby preventing the internal pressure of the reactor vessel from exceeding the design pressure.

In addition, the pressurizer valve device can open and close the communication hole based on the fluid introduced from the outside of the containment vessel, and the vessel pressure, preventing the communication hole from being opened with a delay.

In addition, the bellows may divide the inner space of the valve housing to block steam from being discharged to the outside.

In accordance with one embodiment of the present disclosure, a pressurizer valve device comprising: a valve housing disposed in a reactor vessel accommodated in a containment vessel, and having a communication hole through which steam in the reactor vessel is introduced, a discharge hole, through which the steam introduced into an interior of the reactor vessel is discharged to the containment vessel, and a connection hole, through which a fluid is introduced; and a valve piston disposed to be movable in one direction in the interior of the valve housing, and configured to open and close the communication hole depending on a change in a vessel pressure in the reactor vessel.

Further, a reactor facility may comprise: a reactor vessel; a containment vessel accommodating the reactor vessel; and a pressurizer valve device disposed in the reactor vessel, and configured to discharge steam in the reactor vessel to an interior of the containment vessel so that an internal pressure of the reactor vessel decreases; a valve housing, disposed in the reactor vessel accommodated in the containment vessel, and having a communication hole through which the steam in the reactor vessel is introduced, a discharge hole, through which the steam introduced into an interior of the reactor vessel is discharged to the containment vessel, and a connection hole, through which a fluid is introduced; and a valve piston disposed to be movable in one direction in the interior of the valve housing, and configured to open and close the communication hole depending on a change in a vessel pressure in the reactor vessel.

### BRIEF DESCRIPTION OF THE DRAWINGS

FIG. 1 is a view illustrating a pressurizer valve device and a reactor facility including the same according to a first embodiment of the present disclosure.
FIG. 2 is a view illustrating a state, in which a communication hole is open while the pressurizer valve device of FIG. 1 is open.
FIG. 3 is a view illustrating a state, in which the communication hole is closed while the pressurizer valve device of FIG. 1 is closed.
FIG. 4 is a graph illustrating a change in a pressure in a reactor vessel and a change in a pressure in a containment vessel due to opening and closing of the pressurizer valve device of FIG. 1.
FIG. 5 is a view illustrating a first example of a pressurizer valve device and a reactor facility including the same according to a second embodiment of the present disclosure.
FIG. 6 is a view illustrating a second example of a pressurizer valve device and a reactor facility including the same according to a second embodiment of the present disclosure.
FIG. 7 is a view illustrating a pressurizer valve device and a reactor facility including the same according to a third embodiment of the present disclosure.
FIG. 8 is a view illustrating a pressurizer valve device and a reactor facility including the same according to a fourth embodiment of the present disclosure.

### DETAILED DESCRIPTION OF THE INVENTION

Hereinafter, a pressurizer valve device 30 and a reactor facility 1 including the same according to a first embodiment of the present disclosure will be described with reference to the drawings.

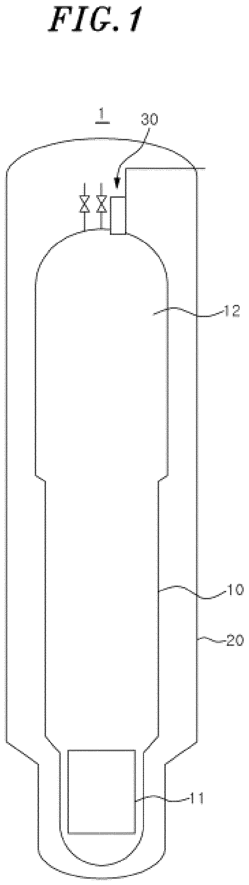

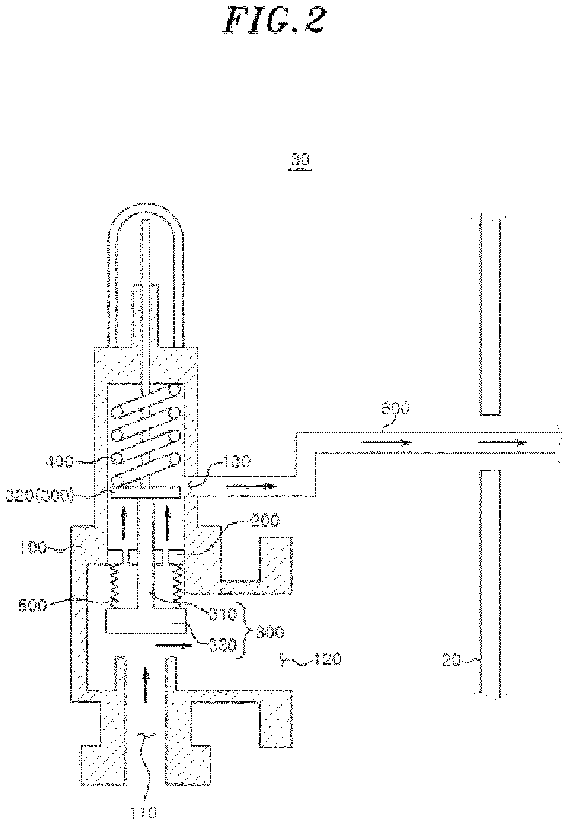

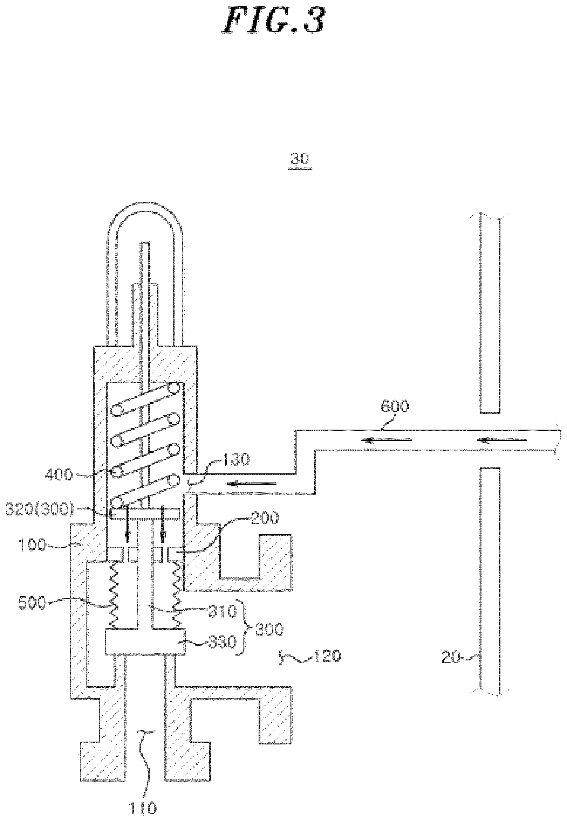

Referring to FIGS. 1 to 3, the reactor facility 1 may generate steam for operating turbines, ships, facilities, and the like. This reactor facility 1 may be installed on the ground, but is not limited thereto, and may be loaded on mobile apparatuses, such as ships and vehicles. The reactor facility 1 may include a reactor vessel 10, a containment vessel 20, and the pressurizer valve device 30.

The reactor vessel 10 may include a reactor core 11 for generating heat and steam by using nuclear fission. Furthermore, a pressurizer 12 for adjusting an internal pressure of the reactor vessel 10 may provided at an upper portion of the reactor vessel 10. When the reactor facility 1 is in an accident state, the reactor vessel 10 may discharge steam to the containment vessel 20. The steam discharged to the containment vessel 20 may be formed of condensate. Furthermore, in an accident state, the internal pressure of the reactor vessel 10 may be decreased while the steam is discharged.

The containment vessel 20 may accommodate the reactor vessel 10. An interior of the containment vessel 20 may be maintained in a vacuum state when the reactor facility 1 is in a normal operation state. Furthermore, when the reactor facility 1 is in an accident state, the internal pressure of the containment vessel 20 may be increased due to the steam discharged from the reactor vessel 10 and the condensate may be accommodated.

The pressurizer valve device 30 may discharge the steam in the reactor vessel 10 to the containment vessel 20 so that the internal pressure of the reactor vessel 10 may be decreased. In other words, the pressurizer valve device 30 may be opened during an accident of the reactor facility 1, so that the internal pressure of the reactor vessel 10 decreases. When the pressurizer valve device 30 is in a normal operation state, a valve piston 300 that will be described later closes a communication hole 110, so that the steam is prevented from being discharged to the containment vessel 20. When the internal pressure of the reactor vessel 10 reaches the opening pressure in an accident state of the pressurizer valve device 30, the valve piston 300 may be moved upward while being pushed by the pressure, the communication hole 110 may be opened, and the steam may be discharged to the containment vessel 20. In the pressurizer valve device 30, when the internal pressure of the reactor vessel 10 is lowered to the opening pressure or less again, the valve piston 300 may be moved downward due to a force of a valve spring 400 and an external pressure to close the communication hole 110 again. The pressurizer valve device 30 may be disposed at an upper end of the pressurizer 12 to be opened and closed so that the pressurizer 12 and the containment vessel 20 communicate with each other. The pressurizer valve device 30 may include a valve housing 100, a protrusion 200, a valve piston 300, a valve spring 400, a bellows 500, and a discharge passage 600. Hereinafter, the internal pressure of the reactor vessel 10 will be referred to as a vessel pressure.

The valve housing 100 may provide a space for accommodating the valve piston 300, the valve spring 400, and the bellows 500. The valve housing 100 may be disposed at an upper end of the reactor vessel 10. In other words, the valve housing 100 may be disposed at an upper end of the pressurizer 12. Furthermore, a communication hole 110, a discharge hole 120, and a connection hole 130 may be formed in the valve housing 100.

The communication hole 110 may communicate with the reactor vessel 10 to introduce the steam in the reactor vessel 10 into the valve housing 100. The communication hole 110 may be disposed on a lower side of the valve housing 100. In other words, the communication hole 110 may be disposed on a lower side of the valve piston 300. Furthermore, the communication hole 110 may be opened or closed by the valve piston 300. When the communication hole 110 is opened by the valve piston 300, it may communicate with the discharge hole 120. In other words, the steam may be introduced into the valve housing 100 through the communication hole 110, and then may be discharged to the containment vessel 20 through the discharge hole 120.

The discharge hole 120 may communicate with the containment vessel 20, and may discharge the steam from the valve housing 100 to the containment vessel 20. The discharge hole 120 may be disposed on a lower side of the connection hole 130, and may be disposed on an upper side of the communication hole 110. In a normal operation state, because the valve piston 300 blocks the communication hole 110, the discharge hole 120 may not be operated. In an accident state, when the internal pressure reaches the opening pressure, the valve piston 300 may be moved upward to opens the communication hole 110, and the steam introduced into the interior of the valve housing 100 may be discharged into the containment vessel 20 through the discharge hole 120.

The connection hole 130 may communicate with the discharge passage 600 so that the fluid that flows in the discharge passage 600 is introduced or the fluid in the valve housing 100 may be discharged to the discharge passage 600. The connection hole 130 may be blocked from the discharge hole 120 and the communication hole 110 by the bellows 500. The connection hole 130 may be located on an upper side of the discharge hole 120.

The protrusion 200 may protrude from an inner surface of the valve housing 100 to support one or more of the valve piston 300 and the bellows 500. The protrusion 200 may fix an upper end of the bellows 500 so that the bellows 500 may be stably expanded and contracted. Furthermore, the protrusion 200 may allow the valve piston 300 to be moved straight up and down without being disturbed. When the protrusion 200 allows the valve piston 300 to be moved straight up and down without being disturbed, the valve piston 300 may accurately open and close the communication hole 110.

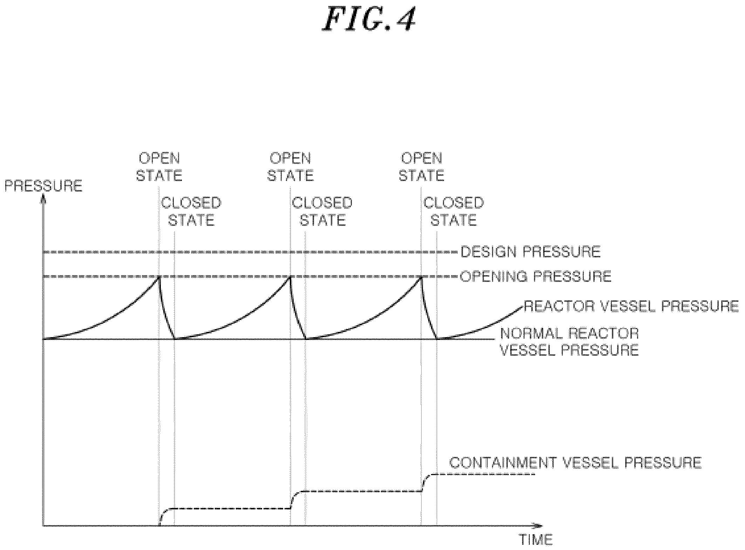

Referring further to FIG. 4, the valve piston 300 may be disposed to be movable in one direction in the interior of the valve housing 100 so that the communication hole 110 may be opened and closed. The one direction may be an upward/downward direction. Furthermore, when the vessel pressure reaches a preset opening pressure, the valve piston 300 may be pressed by the vessel pressure and be spaced apart from the communication hole 110 to open the communication hole 110. In other words, when the vessel pressure reaches the opening pressure, the valve piston 300 may be moved upward by the vessel pressure. The valve piston 300 usually closes the communication hole 110, but may be raised to open the communication hole 110 when the vessel pressure reaches the opening pressure, and may be lowered downward to close the communication hole 110 when the vessel pressure becomes lower than the opening pressure again. The valve piston 300 may automatically adjust the vessel pressure.

The opening pressure may be formed to be less than a design pressure. The design pressure may be a pressure that the reactor vessel 10 may withstand without being damaged. In other words, when the vessel pressure of the reactor vessel 10 exceeds the design pressure, it may be destroyed. Furthermore, the opening pressure and the design pressure may have a predetermined pressure difference. In other words, through opening and closing of the communication hole 110 of the valve piston 300, the vessel pressure in the reactor vessel 10 may be prevented from reaching the design pressure. After the steam is introduced into the valve housing 100 by the valve piston 300, it may be discharged from the discharge hole 120 to the containment vessel 20.

Furthermore, after the steam is discharged from the discharge hole 120, the internal pressure (vessel pressure) of the reactor vessel 10 decreases to a preset opening pressure or below.

The valve piston 300 may be pressed by a combined force of a force due to the pressure of the fluid introduced through the discharge passage 600 and a restoring force of the valve spring 400 to be moved toward the communication hole 110 so as to close the communication hole 110. In other words, the valve piston 300 may be pressed by one or more of the fluid and the valve spring 400 to be moved downward when the vessel pressure is less than the opening pressure.

The valve piston 300 may include a rod 310, a piston plate 320, and a piston head 330.

The rod 310 may extend in one direction, and may be disposed to be movable in the one direction in the interior of the valve housing 100. In other words, the rod 310 may extend in the upward/downward direction. The rod 310 may support the piston plate 320 and the piston head 330.

The piston plate 320 may be supported by an upper end of the rod 310. The piston plate 320 may contact the valve spring 400. In other words, the valve spring 400 may be disposed on an upper side of the piston plate 320. Furthermore, the piston plate 320 may be located on an upper side of the protrusion 200.

The piston head 330 may be supported by a lower end of the rod 310. The piston head 330 may be moved in the upward/downward direction in the interior of the valve housing 100 to open and close the communication hole 110. In other words, when the piston head 330 is moved downward, the communication hole 110 may be closed. Furthermore, when the piston head 330 is moved upward, the communication hole 110 may be opened. The piston head 330 may be disposed on a lower side of the protrusion 200.

When the valve piston 300 is moved to open the communication hole 110, the valve spring 400 is compressed by the valve piston 300, and when the valve piston 300 is moved to close the communication hole 110, a restoring force may be provided to the valve piston 300. The valve spring 400 may be disposed on an upper side of the valve piston 300. The valve spring 400 may be set such that the valve piston 300 may be moved upward by the vessel pressure when the vessel pressure reaches the opening pressure.

The bellows 500 may be supported by the protrusion 200 to be expanded and contracted according to the movement of the valve piston 300, and may block the fluid introduced into the interior of the valve housing 100 from flowing to the connection hole 130. In other words, the bellows 500 may divide a space in the interior of the valve housing 100 into a first space, into which the fluid is introduced, and a second space, into which the steam is introduced, and may block them from each other. The steam and the fluid may be prevented from being mixed in the interior of the valve housing 100 by the bellows 500.

One side of the bellows 500 may be disposed to be supported by the protrusion 200 and an opposite side thereof, which is opposite to the one side, may be disposed to supported by the piston head 330. The bellows 500 may be contracted when the valve piston 300 is moved upward to open the communication hole 110, and may be expanded when it is moved downward to close the communication hole 110.

The discharge passage 600 may be connected to the valve housing 100 so that one side thereof communicates with the connection hole 130, and an opposite side thereof, which is opposite to the one side, is extended to be disposed on an outside of the containment vessel 20 so as to provide a passage, through which the fluid flows. In other words, the discharge passage 600 may pass through the containment vessel 20. When the valve piston 300 opens the communication hole 110, the fluid may be discharged from the valve housing 100 through the discharge passage 600 and flow to the outside of the containment vessel 20. Furthermore, the fluid may be introduced into the interior of the valve housing 100 after the steam is discharged from the discharge hole 120, through the discharge passage 600, and may press the valve piston 300 to close the communication hole 110. In other words, when the vessel pressure is less than the opening pressure, the fluid may be introduced into the valve housing 100 through the discharge passage 600. The pressure of the fluid may be the atmospheric pressure.

Hereinafter, the operations and effects of the pressurizer valve device 30 and the reactor facility 1 including the same according to a first embodiment of the present disclosure will be described.

The pressurizer valve device 30 according to the first embodiment of the present disclosure may decrease the internal pressure of the reactor vessel 10 by discharging the steam during an accident of the reactor facility 1. In other words, the pressurizer valve device 30 may be switched into an open state and a closed state based on the vessel pressure. Furthermore, the open state and the closed state of the pressurizer valve device 30 may be continuously switched.

The pressurizer valve device 30 may be operated independently of the increased pressure of the containment vessel 20 to prevent the internal pressure of the reactor vessel 10 from reaching the design pressure. In other words, because the connection hole 130 is in communication with the outside of the containment vessel 20, the pressurizer valve device 30 may be opened to discharge the steam to the containment vessel 20 to form the internal pressure at the opening pressure or less when the internal pressure of the reactor vessel 10 reaches the preset opening pressure independent of the increase in the pressure in the containment vessel 20.

The pressurizer valve device 30 may be switched into an open state when the vessel pressure reaches the opening pressure. In the open state, the valve piston 300 may be pressed by the vessel pressure to open the communication hole 110. In other words, when the communication hole 110 is opened, the steam may be introduced into the valve housing 100 through the communication hole 110, and then may be discharged to the containment vessel 20 from the discharge hole 120. Furthermore, when the valve piston 300 is moved to open the communication hole 110 by the vessel pressure, the fluid in the valve housing 100 may be discharged to the outside of the containment vessel 20 through the discharge passage 600.

When the vessel pressure is less than the opening pressure, the pressurizer valve device 30 may be switched into a closed state. In the closed state, the valve piston 300 may be pressed toward the communication hole 110 by the fluid introduced into the valve housing 100 through the discharge passage 600. Furthermore, the valve piston 300 may be moved to the communication hole 110 by the restoring force of the valve spring 400. In other words, the valve piston 300 may close the communication hole 110 with the fluid and the valve spring 400.

The pressurizer valve device 30 may prevent the communication hole 110 from being opened with a delay because the containment vessel 20 may open and close the communication hole 110 based on the pressure of the fluid introduced from the outside, and the vessel pressure. In other words, even when the internal pressure of the containment vessel 20 is increased, the valve piston 300 may be opened when the vessel pressure reaches the opening pressure, by continuously switching the pressurizer valve device 30 into the open state and the closed state. That is, the valve piston 300 may be opened or closed regardless of internal pressure of the containment vessel 20.

Furthermore, because the communication hole 110 may be opened and closed based on the fluid introduced from the outside of the containment vessel 20 and the vessel pressure, the pressurizer valve device 30 may prevent the communication hole 110 from being opened with a delay.

Furthermore, the steam may be blocked from being discharged to the outside by the bellows 500.

Hereinafter, a pressurizer valve device 30 and a reactor facility 1 including the same according to a second embodiment of the present disclosure will be described. In the description of the second embodiment, there is a difference in that a plurality of bellows 500 are included, and thus, the difference will be mainly described.

The plurality of bellows 500 may include a first bellows 510 and a second bellows 520.

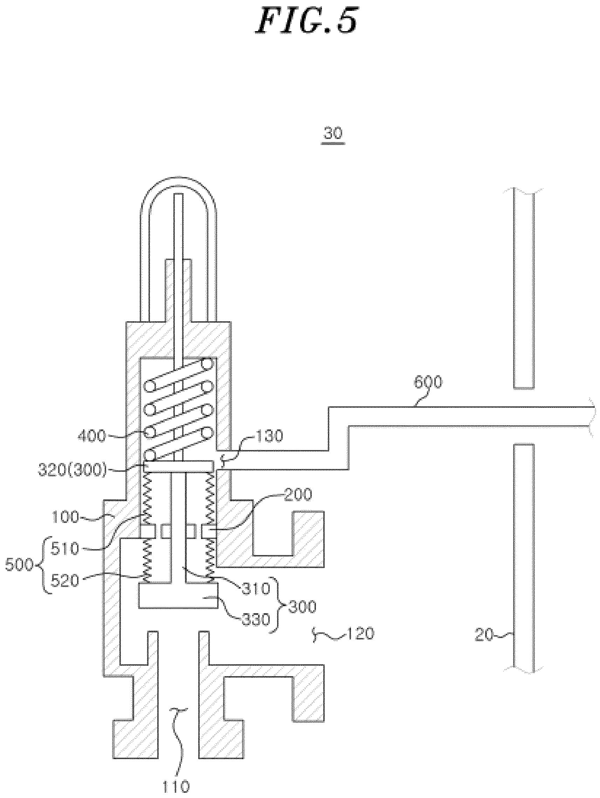

Referring to FIG. 5, as a first example, the first bellows 510 and the second bellows 520 may be disposed in the upward/downward direction in the interior of the valve housing 100. The first bellows 510 may be disposed such that an upper side thereof is supported by the piston plate 320 and a lower side thereof is supported by the protrusion 200. The second bellows 520 may be disposed on a lower side of the first bellows 510, an upper side thereof may be supported by the protrusion 200, and a lower side may be supported by the piston head 330. When any one of the first bellows 510 and the second bellows 520 is contracted, the other one of the first bellows 510 and the second bellows 520 may be expanded.

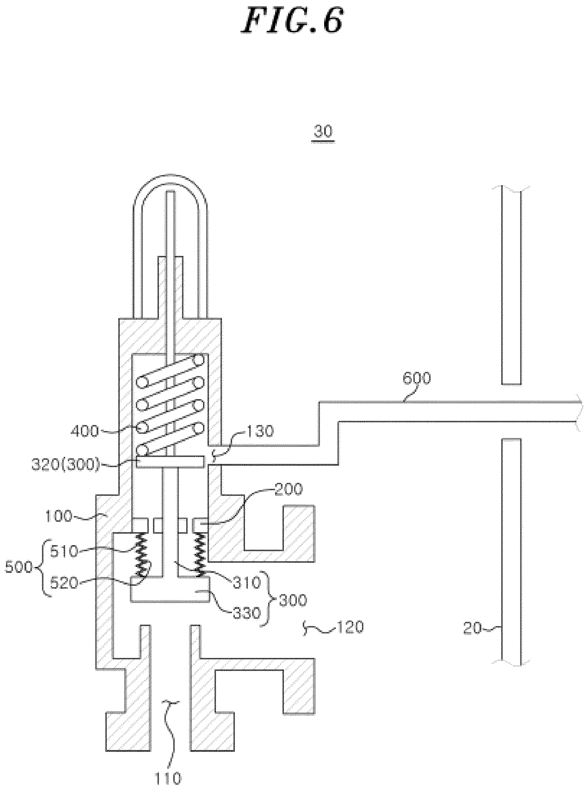

Referring to FIG. 6, as a second example, the first bellows 510 and the second bellows 520 may be supported by the protrusion 200 and the piston head 330 and may be disposed to overlap each other. In other words, the first bellows 510 and the second bellows 520 may be disposed dually. One of the first bellows 510 and the second bellows 520 may be disposed closer to the rod 310 than the other one of the first bellows 510 and the second bellows 520.

Hereinafter, the operations and effects of the pressurizer valve device 30 and the reactor facility 1 including the same according to the second embodiment of the present disclosure will be described.

Because the pressurizer valve device 30 according to the second embodiment of the present disclosure may include the plurality of bellows 500, the steam and the fluid may be prevented from being mixed.

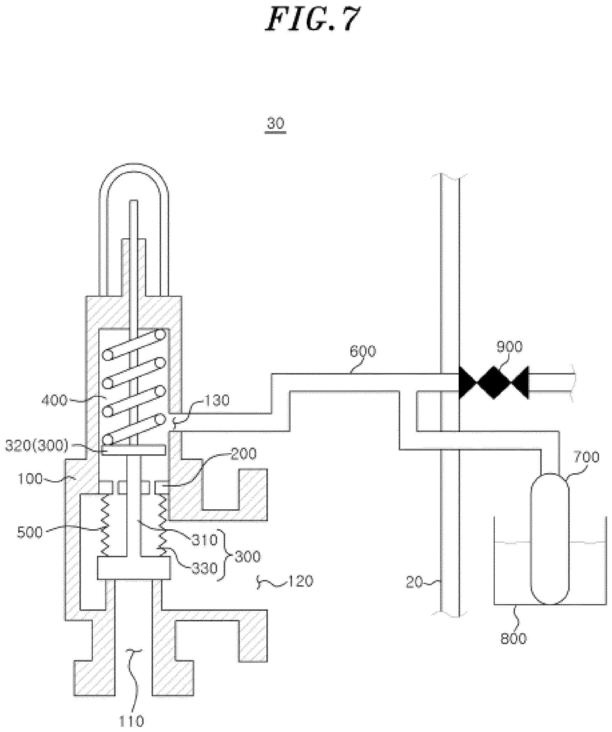

Hereinafter, a pressurizer valve device 30 according to a third embodiment of the present disclosure will be described with reference to FIG. 7. In the description of the third embodiment, there is a difference in that at least one of a chamber 700, a water tank 800, and a pressurizer valve 900 is further included, and the difference will be mainly described.

The chamber 700 may provide a space for accommodating a fluid in an interior thereof. Furthermore, the chamber 700 may be disposed on an outside of the containment vessel 20. Furthermore, the chamber 700 may be connected to the discharge passage 600. In other words, the chamber 700 may accommodate the fluid introduced through the discharge passage 600 or discharge the fluid into the discharge passage 600.

The water tank 800 may accommodate the chamber 700 such that at least a portion of the chamber 700 is immersed in water. The water tank 800 may be disposed on an outside of the containment vessel 20.

The pressurizer valve 900 may be connected to the discharge passage 600 and may open and close the discharge passage 600 to supply the fluid to the chamber 700. In other words, the pressurizer valve 900 may open the discharge passage 600 so that fluid is injected into the chamber 700. The pressurizer valve 900 may be provided in the discharge passage 600 to contact an outer surface of the containment vessel 20. Furthermore, a plurality of pressurizer valves 900 may be formed. Any one of the plurality of pressurizer valves 900 may be disposed on the discharge passage 600 to contact the outer surface of the containment vessel 20.

Hereinafter, the operations and effects of the pressurizer valve device 30 and the reactor facility 1 including the same according to the third embodiment of the present disclosure will be described.

Because the fluid may be supplied to the valve housing 100 by at least one of the chamber 700, the water tank 800, and the pressurizer valve 900 of the pressurizer valve device 30 according to the third embodiment of the present disclosure, the valve piston 300 may be efficiently opened and closed. Furthermore, even when the bellows 500 are damaged, the steam may be blocked from being discharged to the outside of the containment vessel 20. In other words, the pressurizer valve 900, the chamber 700, and the like serve as a physical barrier that prevents the steam containing radioactive materials from being leaked to the outside through the discharge passage 600 due to a damage to a component of the pressurizer valve device 30.

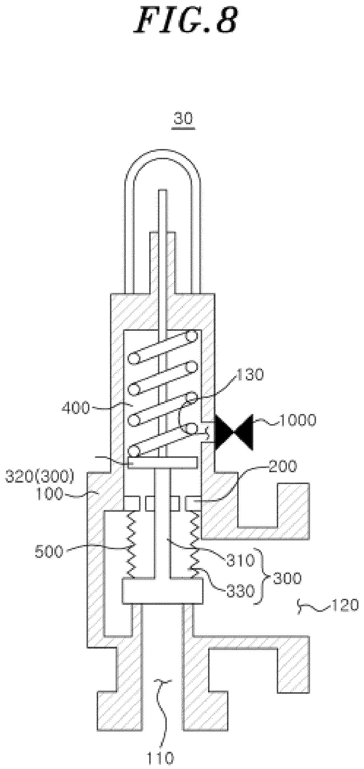

Hereinafter, a pressurizer valve device 30 according to a fourth embodiment of the present disclosure will be described with reference to FIG. 8. In the description of the fourth embodiment, because there is a difference in that a vacuum valve 1000 is further included, the difference will be mainly described.

The vacuum valve 1000 may vacuum at least a portion of the interior of the valve housing 100, and may maintain a created vacuum state. Specifically, the vacuum valve 1000 may vacuum a space of the interior of the valve housing 100, on an upper side of the piston plate 320, and may maintain the created vacuum state. When the vacuum valve 1000 vacuums at least a portion of the interior of the valve housing 100, the valve piston 300 may be operated in response to the vessel pressure thereafter. Specifically, when the vessel pressure increases, the communication hole 110 may be opened and the steam may be discharged while the valve piston 300 is raised, and when the vessel pressure decreases, the valve piston 300 may be lowered and the communication hole 110 may be closed. The vacuum valve 1000 may be provided on an outside of the connection hole 130. The vacuum valve 1000 may be provided while being welded to an outside of the connection hole 130.

Hereinafter, the operations and effects of the pressurizer valve device 30 and the reactor facility 1 including the same according to the fourth embodiment of the present disclosure will be described.

By the vacuum valve 1000 of the pressurizer valve device 30 according to the fourth embodiment of the present disclosure, the pressurizer valve device 30 may be operated simply and stably without requiring a complicated passage. Furthermore, the pressurizer valve device 30 may not be affected by a change in an external pressure, such as a water pressure.

## Claims

1. A pressurizer valve device comprising:
a valve housing, disposed in a reactor vessel accommodated in a containment vessel, and having a communication hole through which steam in the reactor vessel is introduced, a discharge hole through which the steam introduced into an interior of the reactor vessel is discharged to the containment vessel, and a connection hole, through which a fluid is introduced; and
a valve piston disposed to be movable in one direction in the interior of the valve housing, and configured to open and close the communication hole depending on a change in a vessel pressure in the reactor vessel.

2. The pressurizer valve device of claim 1, further comprising:
a discharge passage connected to the valve housing such that one side thereof communicates with the connection hole, and extending such that an opposite side thereof, is disposed on an outside of the containment vessel to provide a passage through which the fluid flows.

3. The pressurizer valve device of claim 2, wherein the valve piston is configured to:
be pressed by the vessel pressure, and be spaced apart from the communication hole to open the communication hole when the vessel pressure reaches a preset opening pressure; and
be pressed by the fluid introduced through the discharge passage, and be moved toward the communication hole to close the communication hole when the vessel pressure is less than the preset opening pressure.

4. The pressurizer valve device of claim 1, wherein the communication hole is disposed below the valve piston,
wherein the connection hole is located above the discharge hole, and
wherein the communication hole and the discharge hole communicate with each other when the valve piston opens the communication hole.

5. The pressurizer valve device of claim 1, further comprising:
a valve spring configured to be compressed by the valve piston when the valve piston is moved to open the communication hole, and to provide a restoring force to the valve piston when the valve piston is moved to close the communication hole.

6. The pressurizer valve device of claim 4, wherein the valve spring is disposed above the valve piston.

7. The pressurizer valve device of claim 1, further comprising:
a protrusion protruding from an inner surface of the valve housing; and
a bellows supported by the protrusion to be expanded and contracted as the valve piston is moved, and configured to block the steam introduced into the interior of the valve housing from flowing to the connection hole.

8. The pressurizer valve device of claim 7, wherein the valve piston includes:
a rod extending in the one direction; and
a piston plate supported by one side of the rod; and
a piston head supported by an opposite side of the rod, which is opposite to the one side, and configured to open and close the communication hole,
wherein one side of the bellows is supported by the protrusion, and an opposite side thereof, which is opposite to the one side, is supported by the piston head.

9. The pressurizer valve device of claim 7, wherein the valve piston includes:
a rod extending in the one direction; and
a piston plate supported by one side of the rod; and
a piston head supported by an opposite side of the rod, which is opposite to the one side, and configured to open and close the communication hole,
wherein a plurality of bellows are provided, and the plurality of bellows include:
a first bellows supported by the protrusion and the piston head to be contracted; and
a second bellows supported by the protrusion and the piston plate to be contracted.

10. The pressurizer valve device of claim 2, further comprising:
a pressurizer valve disposed in the discharge passage to be disposed on an outside of the containment vessel so as to open and close the discharge passage.

11. The pressurizer valve device of claim 10, further comprising:
a chamber configured to provide a space, in which the fluid is accommodated in an interior thereof, and connected to the discharge passage to be disposed on an outside of the containment vessel; and
a water tank accommodating the chamber such that the chamber is immersed in water.

12. The pressurizer valve device of claim 10, wherein the pressurizer valve is disposed in the discharge passage to contact an outer surface of the containment vessel.

13. The pressurizer valve device of claim 1, further comprising:
a vacuum valve configured to vacuum at least a portion of the interior of the valve housing and maintain a created vacuum state.

14. A reactor facility comprising:
a reactor vessel;
a containment vessel accommodating the reactor vessel; and
a pressurizer valve device disposed in the reactor vessel, and configured to discharge steam in the reactor vessel to an interior of the containment vessel so that an internal pressure of the reactor vessel decreases;
a valve housing, disposed in the reactor vessel accommodated in the containment vessel, and having a communication hole through which the steam in the reactor vessel is introduced, a discharge hole, through which the steam introduced into an interior of the reactor vessel is discharged to the containment vessel, and a connection hole, through which a fluid is introduced; and
a valve piston disposed to be movable in one direction in the interior of the valve housing, and configured to open and close the communication hole depending on a change in a vessel pressure in the reactor vessel.
